# EUROPÄISCHE PATENTSCHRIFT

(11) **EP 3 239 578 B1**
(45) Veröffentlichungstag und Bekanntmachung des Hinweises auf die Patenterteilung: **03.10.2018**
(21) Anmeldenummer: 17170015.6
(22) Anmeldetag: 04.05.2016
(51) Int. Cl.: F16L 5/02, F16L 21/00, F16L 25/14

(54) **MUFFENADAPTER MIT KEIL**
SLEEVE ADAPTER WITH WEDGE
ADAPTATEUR DE MANCHON DOTÉ D'UNE CALE

(30) Priorität: 04.05.2015 DE 202015102252 U
(43) Veröffentlichungstag der Anmeldung: 01.11.2017
(62) Teilanmeldung aus: 16168330.5
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- FR-A1- 2 673 263
- US-A- 2 226 067
- US-A- 4 627 647

## Beschreibung

Die Erfindung betrifft einen Muffenadapter.

Aus dem Bereich beispielsweise der Kanalisation ist es bekannt, Rohre oder Schächte mit vergleichsweise großen Wandstärken von beispielsweise 30 oder mehr Millimetern zu verwenden. Beispielsweise können Schächte oder Rohrleitungen aus Beton oder aus Steinzeug derartig große Wandstärken aufweisen, oder es können Rohre mit einer strukturierten Wand verwendet werden, die beispielsweise ein inneres, glattwandiges Rohr aus Kunststoff aufweisen und einen äußeren Wellrohrmantel ebenfalls aus Kunststoff, der zwar eine ebenfalls vergleichsweise dünne Wandstärke aufweist, durch seinen wellig strukturierten Verlauf allerdings für das gesamte Rohr bzw. den gesamten Schacht eine vergleichsweise große Wandstärke ergibt. Im Unterschied dazu weisen glattwandige Kunststoffrohre eine Wandstärke auf, die zwar je nach dem Nenndurchmesser unterschiedlich groß sein kann, jedoch üblicherweise unter der Wandstärke eines der oben genannten Rohre liegt.

Bei diesen Rohren oder Schächten mit vergleichsweise großer Wandstärke, die aus Beton, Steingut oder Kunststoffgebildet sind oder die eine strukturierte Wand aufweisen, ergibt sich in der Praxis häufig das Problem, dass der Innendurchmesser der Rohrabschnitte zwar genormt ist, herstellerspezifisch und je nach verwendetem Werkstoff jedoch unterschiedliche Außendurchmesser auftreten. Hieraus ergibt sich beispielsweise im Sanierungsfall oder auch im Falle eines Werkstoffwechsels, wie er aus unterschiedlichen Gründen auch bei Neuverlegungen vorgesehen werden kann das Problem, an einem vorhandenen Schacht, der eine Muffe zum Anschluss eines Spitzendes eines Rohrleitungsabschnitts aufweist, oder an das Muffenende eines vorhandenen Rohrabschnitts einen andersartigen Rohrabschnitt anschließen zu lassen. Dies kann beispielsweise der Fall sein, wenn jahrzehntealte Schächte bzw. Rohre repariert werden müssen und beispielsweise der damalige Rohrhersteller nicht mehr existiert, mithin Rohrabschnitte mit dem gleichen Außendurchmesser möglicherweise nicht problemlos verfügbar sind, oder wenn im Sanierungsfall ein Rohrabschnitt mit dünnerer Wandstärke verwendet werden soll, während die bereits vorhandenen Muffen in einem Schacht oder in einem Rohrabschnitt einen erheblich größeren Innendurchmesser aufweisen, der zur Aufnahme eines Rohrabschnitts mit gleichem Nenndurchmesser, aber entsprechend größerer Wandstärke dimensioniert ist.

Aus der FR 2 673 263 A1, der US 2 226 067 A und auch aus der US 4 627 647 A ist jeweils eine Dichtungsanordnung bekannt, bei welcher ein Dichtungsring einen umlaufenden Schlitz aufweist und ein ringförmiger, ein- oder mehrteiliger Keil in den Schlitz eingetrieben wird, um die Dichtung aufzuweiten. Der Keil liegt somit stets beidseitig dem Dichtungswerkstoff an.

Der Erfindung liegt die Aufgabe zugrunde, einen Rohrabschnitt anzugeben, der in Art eines Universal-Ersatzteils den Anschluss an Muffen mit unterschiedlich großen Innendurchmessern ermöglicht.

Diese Aufgabe wird durch einen Muffenadapter mit den Merkmalen des Anspruchs 1 gelöst. Vorteilhafte Ausgestaltungen der Erfindung sind in den Unteransprüchen beschrieben.

Die Erfindung schlägt mit anderen Worten einen Muffenadapter vor, der einerseits den an die Muffe anzuschließenden Rohrabschnitt aufweist. Außen um den Rohrabschnitt herum verläuft zirkumferent eine Dichtung aus einem elastisch verformbaren Werkstoff. Vorschlagsgemäß kann diese Dichtung verformt werden, beispielsweise gedehnt, gestreckt oder gespreizt werden, um den Muffenadapter an Muffen mit unterschiedlich großen Innendurchmessern anpassen zu können, z. B. indem die Dichtung dazu aufgeweitet wird. Hierzu ist wenigstens ein Dehnelement vorgesehen, welches radial innerhalb der Dichtung angeordnet ist, also zwischen dem Rohrabschnitt und der Dichtung. Das Dehnelement ist radial nach außen beweglich, so dass es die Wirkung hat, als wenn der Rohrabschnitt unterschiedlich große äußere Durchmesser aufweisen würde, und so dass die außen um das Dehnelement verlaufende Dichtung unterschiedlich stark, nämlich je nach Stellung des Dehnelements, aufgespreizt bzw. gedehnt werden kann und der Muffe innen dicht anliegen kann.

Vorteilhaft ist die Dichtung an einem Ende des Rohrabschnitts angeordnet, wobei dieses Ende zum Anschluss an eine dickwandige Rohrleitung oder an eine Rohrleitung mit einem Innendurchmesser dient, der größer ist als der Innendurchmesser des Rohrabschnitts, so dass diese Rohrleitung im Vergleich zu dem Rohrabschnitt des Muffenadapters als die größere Rohrleitung bezeichnet werden kann. Der Dichtung gegenüberliegend ist das andere Ende des Rohrabschnitts als Muffen- oder Spitzende derart ausgestaltet, dass es an die weiterführende Rohrleitung, die als die kleinere Rohrleitung bezeichnet werden kann, mit einer für diese kleinere Rohrleitung typischen Muffenverbindung anschließbar ist.

Eine andere Verwendung des vorschlagsgemäßen Muffenadapters liegt darin, bei einer so genannten Hauseinführung oder Mauereinführung die Rohrleitung gegenüber dem umgebenden Mauerwerk eines Gebäudes abzudichten. In diesem Fall ist die Dichtung vorteilhaft nicht an einem Ende des Rohrabschnitts angeordnet, sondern dort, wo der Rohrabschnitt von dem Mauerwerk des Gebäudes umgeben ist, während die beiden Enden des Rohrabschnitts im Abstand davon als Muffen- und als Spitzende ausgestaltet sind und den Anschluss zusätzlicher Abschnitte der Rohrleitung außerhalb und innerhalb des Gebäudes ermöglichen. Nachfolgend wird der Muffenadapter stets anhand einer Anwendung erläutert, bei welcher er den Anschluss der oben erläuterten kleineren Rohrleitung an ein Muffenende der oben erläuterten größeren Rohrleitung ermöglicht.

Vorschlagsgemäß ist zum Dehnen der Dichtung des Muffenadapters wenigstens ein Keil sowie wenigstens ein Widerlager vorgesehen, welches mit dem Keil zusammenwirkt. Keil und Widerlager sind gemeinsam in radialer Richtung innen von der Dichtung angeordnet, also zwischen dem Rohrabschnitt und der Dichtung. Sie sind in axialer Richtung gegeneinander beweglich angeordnet, so dass sie sich unterschiedlich weit überdecken können und somit unterschiedlich große äußere Durchmesser des Rohrabschnitts bewirken und somit die außen verlaufende Dichtung unterschiedlich stark aufspreizen können.

Als Keil wird im Rahmen des vorliegenden Vorschlags ein bewegliches Element bezeichnet und als Widerlager ein Element, mit welchem der Keil zusammenwirken kann, so dass durch die Relativbewegung zwischen diesen beiden Bauteilen und durch den unterschiedlichen Überdeckungsgrad, mit welchem diese beiden Bauteile angeordnet sind, sich die unterschiedlichen wirksamen Außenumfänge bzw. Außendurchmesser des Rohrabschnitts ergeben. Das Widerlager kann vorzugsweise ortsfest am Rohrabschnitt angeordnet sein. Es kann daher beispielsweise als geschlossener Ring ausgestaltet sein. Dies ermöglicht bei der Herstellung des Muffenadapters in wirtschaftlich vorteilhafter Weise, dass nur vergleichsweise wenige Bauteile gehandhabt zu werden brauchen. Es können jedoch auch mehrere Widerlager vorgesehen sein, beispielsweise kann jedem Keil ein eigenes Widerlager zugeordnet sein, oder es können Widerlager mit unterschiedlichen Abmessungen vorgesehen sein.

Da als Keil das bewegliche Bauelement bezeichnet wird, ergibt sich bei dem zunehmenden Umfang bei fortschreitender Bewegung, dass der Keil entweder dementsprechend dehnbar ausgestaltet sein muss oder dass mehrere Keile über den Umfang des Rohrabschnitts verteilt angeordnet sein müssen, deren Abstände zueinander sich bei fortschreitender Bewegung vergrößern. Die Verwendung einer Vielzahl einzelner Keile ist insofern vorteilhaft, als durch Verwendung standardisierter Bauelemente, lediglich durch die Verwendung unterschiedlicher Anzahlen der verwendeten Keile, die Herstellung von unterschiedlichen Muffenadaptern mit unterschiedlichen Nenndurchmessern ihrer jeweiligen Rohrabschnitte ermöglich wird.

In der Praxis weisen die Muffen häufig eine Einstecktiefe von lediglich bis zu 80 mm auf. Um den vorschlagsgemäßen Muffenadapter in Art des bereits erwähnten Universal-Ersatzteils verwenden zu können, nämlich an viele unterschiedliche MuffenInnendurchmesser anpassen zu können, ist es daher vorteilhaft, wenn die Spreizbewegung der Dichtung mit einer möglichst geringen Bewegung zwischen Keil und Widerlager ermöglicht wird. Hierzu kann beispielsweise vorgesehen sein, als Keil einen so genannten Dachdeckerkeil bzw. Sparrenkeil zu verwenden, der als preisgünstiges Bauteil handelsüblich ist und von Dachdeckern beispielsweise verwendet wird, um bei hohl liegenden Dachlatten den Abstand zwischen der Dachlatte und einem Dachsparren auszugleichen. Derartige Sparrenkeile sind in mehreren unterschiedlichen Materialstärken handelsüblich. Sie weisen eine vergleichsweise kurze und vergleichsweise steil ansteigende Einführungsschräge auf und ermöglichen bei der Anwendung im Rahmen des vorschlagsgemäßen Muffenadapters bei einem vergleichsweise kurzen Verstellweg eine vergleichsweise große Zunahme des äußeren Umfangs des Rohrabschnitts innerhalb der Dichtung und somit eine vergleichsweise große Spreizung der Dichtung.

Vorteilhaft kann die Dichtung mehrere außen zirkumferent umlaufende Vorsprünge aufweisen, beispielsweise bei gleichbleibender Wandstärke in Form von welligen bzw. wulstartigen Verläufen, oder indem sie stark unterschiedliche Wandstärken aufweist und somit umlaufende Rippen bildet. Durch derartige Vorsprünge wird die Dichtwirkung der Dichtung gegenüber der inneren Oberfläche der Muffe, welche den Muffenadapter aufnimmt, verbessert. Zudem können diese Vorsprünge widerhakenartig ausgestaltet sein und somit die Dichtung gegen Verschieben sichern.

Die Bewegung des Keils relativ zum Widerlager kann vorteilhaft mit Hilfe eines Treibrings durchgeführt werden. Der Treibring kann entweder dem einen bzw. den mehreren Keilen anliegen , so dass durch Bewegung des Treibrings in axialer Richtung längs am Rohrabschnitt entlang der Keil bzw. die Keile auf das Widerlager aufgeschoben werden und eine dementsprechend zunehmenden Abstand vom Rohrabschnitt aufweisen und somit die Dichtung nach außen aufspreizen. Alternativ dazu kann es vorgesehen sein, dass die Keile zwar beweglich sind, jedoch ausschließlich radial nach außen, und dass sie in axialer Richtung ortsfest am Rohrabschnitt verbleiben. In diesem Fall ist vorgesehen, dass das Widerlager axial am Rohrabschnitt entlang verschoben wird und dadurch die Keile radial nach außen verlagert werden und somit die Dichtung aufgespreizt wird. In diesem Fall liegt der Treibring dem Widerlager an oder bildet ggf. sogar das Widerlager.

Vorteilhaft kann der Treibring als Schlagring ausgestaltet sein und eine Schlagfläche aufweisen, gegen die beispielsweise mit einem Kunststoffhammer geschlagen werden kann, um den Treibring in axialer Richtung am Rohrabschnitt verschieben zu können.

Statt eines derartigen Antriebs des Treibrings mit Hilfe von Schlägen kann vorgesehen sein, den Treibring mit Hilfe eines oder mehrerer Druckelemente entlang dem Rohrabschnitt zu verlagern. Hierzu ist dem beweglichen Treibring ein Klemmring zugeordnet. Dieser Klemmring kann ortsfest auf dem Rohrabschnitt fixiert werden, und von diesem Klemmring aus erstreckt sich wenigstens ein Druckelement zu dem Treibring. Dieses Druckelement kann beispielsweise als pneumatisches oder hydraulisches Kissen ausgestaltet sein, welches unter Druck expandiert. Es können jedoch auch mehrere Druckelemente entlang dem Umfang des Rohrabschnitts verteilt zwischen dem Klemmring und dem Treibring angeordnet sein, beispielsweise Spindeln, wobei in Abhängigkeit von der Drehrichtung, in welcher die Spindeln betätigt werden, der Abstand zwischen Klemmring und Treibring verändert werden kann. Durch die Betätigung dieses einen bzw. dieser mehreren Druckelemente kann somit der Abstand zwischen Klemmring und Treibring in axialer Richtung des Rohrabschnitts vergrößert werden und somit der Überdeckungsgrad zwischen Keil und Widerlager vergrößert werden, so dass auf diese Weise die Dichtung gespreizt werden kann. Beispielsweise die Betätigung mehrerer Spindeln kann mit vergleichsweise wenig Kraftaufwand eine gleichmäßige Verschiebung des Treibrings ermöglichen, ohne die Gefahr von Verkantungen.

Vorteilhaft kann vorgesehen sein, die gespreizte Anordnung der Dichtung zuverlässig mit Hilfe entsprechender Sicherungselemente beizubehalten, wodurch auch eine Rückschubsicherung bewirkt wird. Hierzu kann beispielsweise eine Sperrkralle vorgesehen sein, die an einem der beweglichen Elemente vorgesehen ist, welche zur Vergrößerung des Überdeckungsgrades zwischen Keil und Widerlager beitragen. Beispielsweise am Treibring, am Keil oder am Widerlager kann eine derartige Sperrkralle vorgesehen sein. Die Sperrkralle ist dabei auf der radial inneren Seite des jeweiligen Elements vorgesehen, so dass sie der äußeren Oberfläche des Rohrabschnitts anliegt und zwar in einer schrägen Ausrichtung. Aufgrund dieser Schrägstellung ermöglicht die Sperrkralle eine Bewegung des beweglichen Elements, also bei der Erhöhung des Überdeckungsgrads zwischen Keil und Widerlager und somit beim Aufspreizen der Dichtung, durch diese Schrägstellung wird jedoch eine Zurückbewegung dieses beweglichen Elements verhindert, so dass die Dichtung zuverlässig ihre gespreizte Anordnung beibehält.

Die Sperrkralle kann aus Metall oder Kunststoff bestehen. Als vorteilhaft hat sich in ersten Versuchen erwiesen, dass sie durch einen flachen Blechzuschnitt gebildet sein kann. Dieser gräbt sich aufgrund seiner Schrägstellung in die Oberfläche des Rohrabschnitts ein, so dass der Sperreffekt, welcher eine Zurückbewegung des beweglichen Elements verhindert umso stärker wird, je größer die Kräfte werden, die eine solche Zurückbewegung zu verursachen bestrebt sind.

Wirtschaftlich vorteilhaft kann eine Mehrzahl von Sperrkrallen vorgesehen sein, die um den Umfang des Rohrabschnitts verteilt an dem erwähnten beweglichen Element vorgesehen sind, wobei diese Mehrzahl von Sperrkrallen vorteilhaft durch ein einziges Bauteil gebildet werden, nämlich durch einen Blechring, der sich um den Rohrabschnitt herum erstreckt.

Die erwähnte Zurückbewegung kann vorteilhaft auch durch eine Schrägverzahnung verhindert werden, die zwischen Keil und Widerlager ausgestaltet ist, wobei die Schrägausrichtung der Verzahnung die Bewegung dieser beiden Elemente ermöglicht, um deren Überdeckungsgrad zu erhöhen, die erwähnte Zurückbewegung jedoch verhindert.

Vorteilhaft können außen auf dem Rohrabschnitt in axialer Richtung hintereinander mehrere Markierungen angeordnet sein. Diese Markierungen können, wie nachfolgend beschrieben, bei der manuellen Montage oder auch bei einer maschinell unterstützten, automatischen Montage die korrekte Wirkung, insbesondere die gewünschte Abdichtung des Muffenadapters im Bereich seiner Dichtung sicherstellen: Wenn die Markierungen jeweils zirkumferent um den Rohrabschnitt herum verlaufen, können Schrägstellungen des Widerlagers bzw. der Keile bzw. des Treibrings zur Achse des Rohrabschnitts schnell erkannt werden, sei es durch optische Sensoren einer automatischen Vorschubeinheit, die bei der Montage des Muffenadapters verwendet wird, sei es durch optische Kontrolle durch das jeweilige Personal. Wenn beispielsweise der Treibring als Schlagring ausgestaltet wird, kann mittels einer solchen Kontrolle die Verteilung der jeweiligen Schläge in der Art erfolgen, dass der Treibring stets optimal quer zur Achse des Rohrabschnitts ausgerichtet ist. Durch die Kontrolle der Ausrichtung des Treibrings ist sichergestellt, dass die Dichtung entlang ihres gesamten Umfangs in gleichem Maße gespreizt bzw. verpresst ist und somit eine optimal gleichmäßige, dichtungswirksame Anlage der Dichtung innen an der Muffe gewährleistet werden kann, welche den Muffenadapter aufnimmt.

Die Markierungen können beispielsweise jeweils als unterbrechungsfreie Linien ausgestaltet sein. Im Vergleich zu Markierungen, die jeweils aus mehreren einzelnen Abschnitten, beispielsweise Linien, Punkten o. dgl. bestehen, ist eine besonders zuverlässige optische Erfassung sichergestellt, ob ein bewegliches Bauteil wie beispielsweise der erwähnte Treibring einen gleichmäßigen Abstand zu einer solchen umlaufenden Markierung aufweist. Dies gilt sowohl für eine automatische optische Erfassung als auch für die optische Kontrolle durch das Personal während der Montage des Muffenadapters.

Da die Markierungen in axialer Richtung hintereinander angeordnet sind, können sie vorteilhaft unterschiedlich ausgestaltet sein, um auf diese Weise anzuzeigen, um welches Maß die Dichtung bei Erreichen einer bestimmten Markierung gespreizt ist, welchen äußeren Umfang bzw. welchen Außendurchmesser der Muffenadapter im Bereich seiner Dichtung aufweist. Die unterschiedliche Ausgestaltung der Markierungen kann vorteilhaft optisch unterschiedlich ausgestaltet sein, beispielsweise durch unterschiedliche Farben, oder indem die Markierungen mit Klartextbeschriftungen versehen sind, beispielsweise unmittelbar den Millimeter-Angaben des Außendurchmessers der Dichtung.

Wenn beispielsweise zunächst der Innendurchmesser der Muffe ermittelt wird, in welche der Muffenadapter eingesetzt werden soll, so kann zunächst der Muffenadapter vorbereitet werden, indem die Dichtung des Muffenadapters so weit aufgespreizt wird, dass sie beispielsweise einen Außendurchmesser aufweist, der dem Innendurchmesser der Muffe gleicht. Auf diese Weise ist es möglich, den Muffenadapter zwar noch zwanglos und ohne Kraftaufwand in die Muffe einzuführen, das anschließende Abdichten jedoch, nämlich die weitere Spreizung bzw. Aufweitung der Dichtung bis zu einer dichten, formschlüssigen Anlage in der Muffe, kann anschließend mit einer vergleichsweise kleinen verbleibenden Relativbewegung zwischen Keil und Widerlager erfolgen. Je nach vorgefundener Einbausituation, beispielsweise beim Sanieren einer im Boden verlegten Kanalisations-Rohrleitung kann die Zugänglichkeit beispielsweise zu dem erwähnten Treibring eingeschränkt sein, so dass auf vorteilhafte Weise der größte Verstellweg des Keils und somit die größte Spreizwirkung der Dichtung nicht im Einbauzustand, sondern vielmehr vorab in bequemer Haltung erzielt werden kann.

Der Rohrabschnitt des Muffenadapters ist in dem Bereich, mit welchem er in die Muffe der vorhandenen Rohrleitung eingesteckt wird, zylindrisch ausgestaltet, wie bereits eingangs erläutert wurde. Das gegenüberliegende Ende des Rohrabschnitts kann als Spitzende ausgestaltet sein, so dass der Rohrabschnitt insgesamt zylindrisch ausgestaltet ist und wie ein Zwischenstück oder Adapterstück zum Anschluss zweier Muffen dient, nämlich einerseits einer Muffe mit vergleichsweise großer Wandstärke, beispielsweise aus Beton, und andererseits der Muffe eines Kunststoffrohrs mit vergleichsweise geringerer Wandstärke. Das gegenüberliegende Ende des Rohrabschnitts kann jedoch wahlweise auch als Muffenende ausgestaltet sein, so dass die Rohrleitung mit unveränderter Ausrichtung ihrer einzelnen Rohre weitergeführt werden kann und mithilfe des Muffenadapters lediglich ein Werkstoffwechsel beispielsweise von Beton oder Keramik zu Kunststoff ermöglicht ist.

Ausführungsbeispiele der Erfindung werden anhand der rein schematischen Darstellungen nachfolgend näher erläutert. Dabei zeigt
- Fig. 1: eine perspektivische Ansicht auf einen in Längsrichtung geschnittenen Muffenadapter,
- Fig. 2: einen Blick auf die Schnittfläche des Muffenadapters von Fig. 1 im Bereich der Dichtung und der angrenzenden Bauteile,
- Fig. 3: einen Anblick ähnlich Fig. 2, jedoch für ein zweites Ausführungsbeispiel, und
- Fig. 4: eine Ansicht ähnlich Fig. 2 oder 3, jedoch für ein drittes Ausführungsbeispiel.

In den Zeichnungen ist mit 1 insgesamt ein Muffenadapter bezeichnet, der einen Rohrabschnitt 2 aufweist sowie eine außen zirkumferent um den Rohrabschnitt 2 herum verlaufende Dichtung 3. Zwischen dem Rohrabschnitt 2 und der Dichtung 3 ist eine Vielzahl von Dehnelementen in Form von Keilen 4 angeordnet, die mit ihren Schrägflächen jeweils einem Widerlager 5 anliegen und auf der gegenüberliegenden Seite einem Treibring 6 anliegen, der als Schlagring ausgestaltet ist und dementsprechend eine Schlagfläche 7 aufweist.

Am äußeren Umfang des Rohrabschnitts 2 ist eine Vielzahl von Markierungen 8 vorgesehen, die in Form von parallelen Ringen in axialer Richtung hintereinander am Rohrabschnitt 2 angeordnet sind. Abweichend von dem dargestellten Ausführungsbeispiel können Angaben in Form von Ziffern im Bereich dieser Markierungen 8 vorgesehen sein, um in Abhängigkeit von der Stellung der Keile 4 den jeweiligen Außendurchmesser der Dichtung 3 anzugeben. Auch ohne derartige Zahlenangaben dienen die Markierungen 8 zur Kontrolle, ob der Treibring 6 präzise ausgerichtet oder versehentlich schräg auf dem Rohrabschnitt 2 angeordnet ist.

Der Treibring 6 weist angrenzend an seine Schlagfläche 7 einen Hohlraum 9 auf, in den ein Metallring 10 eingesetzt ist. Der Metallring 10 weist eine Vielzahl von Sperrkrallen 11 auf, die in den Zeichnungen in ihrem unverformten Zustand dargestellt sind, so dass sich diese Sperrkrallen 11 vermeintlich in exakt radialer Richtung von außen in das Material des Rohrabschnitts 2 erstrecken. Tatsächlich jedoch sind die Sperrkrallen 11 schräg in dem Hohlraum 9 angeordnet und liegen der Außenseite des Rohrabschnitts 2 an. Durch ihre Schrägstellung wirken sie wie Widerhaken und ermöglichen, dass der Treibring 6 in Richtung zum Widerlager 5 hin auf dem Rohrabschnitt 2 verschoben werden kann; eine Zurückbewegung hingegen wird durch die Sperrzungen 11 verhindert. Diese graben sich vielmehr bei einer beginnenden solchen Rückbewegung in das Material des Rohrabschnitts 2 ein, so dass sich die Sperrwirkung der Sperrkrallen 11 bei zunehmender Belastung verstärkt.

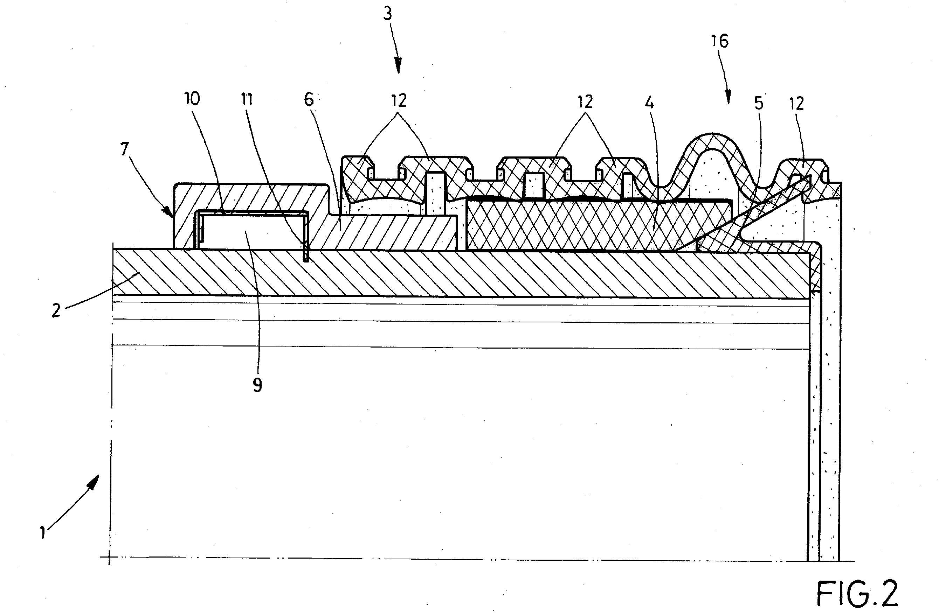

Aus Fig. 2 ist der Verlauf der Dichtung 3 genauer ersichtlich: Die Dichtung 3 weist mehrere außen zirkumferent umlaufende Vorsprünge 12 auf, die einerseits die Dichtwirkung der Dichtung 3 verbessern, wenn diese von innen einer Muffe anliegt, und die zudem die Dehnfähigkeit der Dichtung 3 beim Spreizen verbessern. Die Dichtung 3 liegt dabei formschlüssig dem Treibring 6 an. Wenn mittels des Treibrings 6 der Keil 4 auf das Widerlager 5 getrieben wird, und wenn der Keil 4 dabei seinen Abstand zur Oberfläche des Rohrabschnitts 2 vergrößert, wird die Dichtung 3 in dem Bereich, in dem sie sich um den Treibring 6 und um den Keil 4 herum erstreckt, axial mitsamt diesen beiden Bauteilen verschoben bzw. gestaucht, so dass diesbezüglich kein Reibungswiderstand zwischen diesen beiden Bauteilen und der aus einem Elastomerwerkstoff bestehenden Dichtung 3 zu überwinden ist.

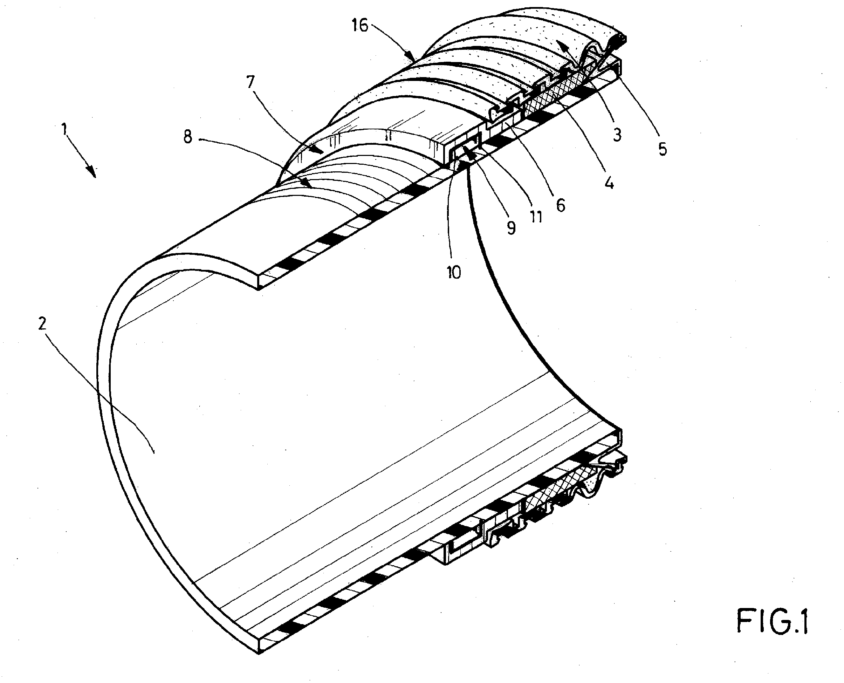

Bei dem Ausführungsbeispiel der Fig. 1 und 2 wird eine Vielzahl von Keilen auf das ortsfest verbleibende, als Ring ausgestaltete Widerlager 5 aufgeschoben. Die Spreizung der Dichtung erfolgt daher vergleichsweise weit von der Schlagfläche 7 des Treibrings 6 entfernt und nahe an dem Ende des Muffenadapters 1, mit welchem dieser in einer Muffe angeordnet wird.

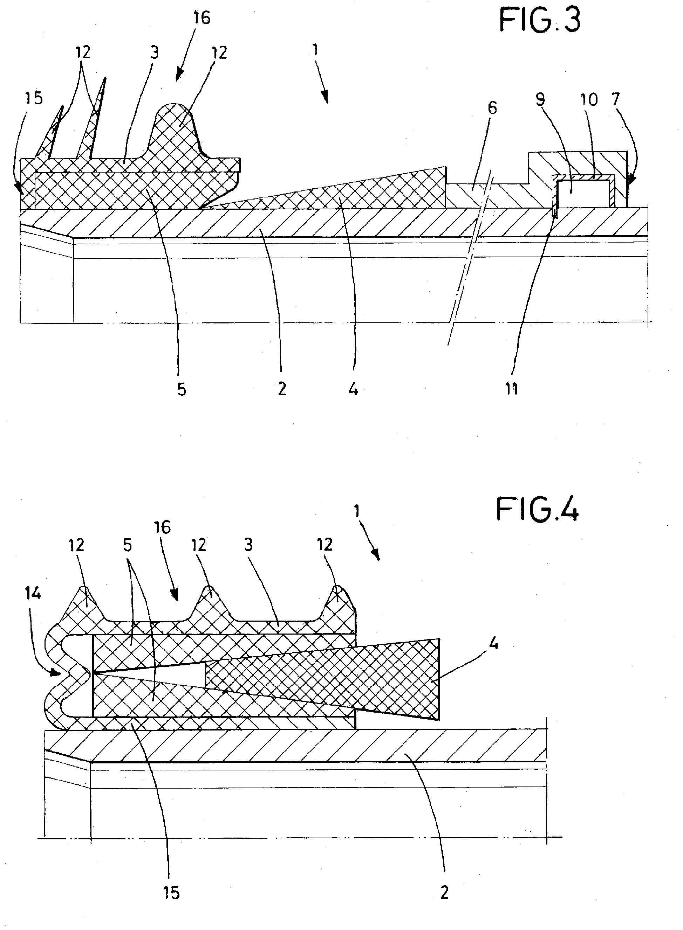

Fig. 3 zeigt demgegenüber ein alternatives Ausführungsbeispiel, bei welchem zwei keilförmig angeschrägte Elemente radial zwischen der Dichtung 3 und dem Rohrabschnitt 2 angeordnet sind. Die unmittelbar der Dichtung 3 anliegenden Elemente werden dabei als Widerlager 5 bezeichnet, weil sie in axialer Richtung ortsfest auf dem Rohrabschnitt 2 verbleiben, während ein ringförmiger, einteiliger Keil 4 als Dehnelement vorgesehen ist, der mittels eines Treibrings 6 und dessen Schlagfläche 7 zwischen die mehreren Widerlager 5 und die Oberfläche des Rohrabschnitts 2 getrieben werden kann. Bei diesem Ausführungsbeispiel erhöht sich der Abstand zwischen den Widerlagern 5 und dem Rohrabschnitt 2, dort am stärksten, wo die Dichtung 3 am weitesten vom Einsteckende des Muffenadapters 1 entfernt angeordnet ist.

In Fig. 3 ist weiterhin ersichtlich, dass die Dichtung 3 mit einem ersten Abschnitt 15 an dem Ende, welches von dem Keil 4 entfernt ist, bis an den Rohrabschnitt 2 heranreicht und dem Rohrabschnitt 2 dicht anliegt. Die Dichtung 3 kann mit diesem ersten Abschnitt beispielsweise mit dem Rohrabschnitt 2 verklebt sein. Auf diese Weise ist ein fluiddichter Übergang vom Inneren des Rohrabschnitts 2 bis in das Innere der Muffe sichergestellt, wenn die Dichtung 3 so weit gedehnt worden ist, dass sie der Muffe dicht anliegt. Von diesem Ende des Rohrabschnitts 2 aus schließt sich an den ersten Abschnitt 15 der Dichtung 3 ein zweiter Abschnitt 16 an, welcher mittels des Dehnelements in Form der Keile 4 und des Widerlagers 5 gedehnt werden kann.

In ähnlicher Weise ist auch beim Ausführungsbeispiel der Fig. 1 vorgesehen, dass die Dichtung 3 einen ersten, aus Übersichtlichkeitsgründen nicht dargestellten Abschnitt 15 aufweist, der fluiddicht an den Rohrabschnitt 2 anschließt, und einen zweiten Abschnitt 16, der mittels der Keile 4 und des Widerlagers 5 gedehnt werden kann.

Fig. 4 zeigt ein Ausführungsbeispiel, bei welchem ein als Keil 4 ausgestaltetes Dehnelement zwischen zwei Widerlagern 5 angeordnet ist. Der Keil 4 kann als einteiliger Ring ausgestaltet sein und das radial innere Widerlager 5 ebenfalls. Radial außen sind hingegen vorzugsweise mehrere separate Widerlager 5 innerhalb der Dichtung 3 angeordnet, so dass durch Erweiterung der Abstände zwischen diesen mehreren Widerlagern 5 der Umfang dieser ringförmigen Anordnung aus Widerlagern 5 problemlos erweitert und die Dichtung 3 auf diese Weise gespreizt werden kann, so dass sich deren Außendurchmesser vergrößert bis zu einer dichten Anlage an einer Muffe. Am Einsteckende des Muffenadapters 1 weist bei diesem Ausführungsbeispiel die Dichtung 3 eine Dehnfuge 14 auf, die den ersten, dicht am Rohrabschnitt 2 anliegenden Abschnitt 15 der Dichtung 3 mit dem zweiten Abschnitt 16 der Dichtung 3 verbindet. Ähnliche Dehnfugen können auch bei den Ausführungsbeispielen der Fig. 1 bis 3 zwischen den Abschnitten 15 und 16 der jeweiligen Dichtung 3 vorgesehen sein.

Bei den Ausführungsbeispielen der Fig. 1 bis 4 können die aneinander anliegenden Oberflächen des Keils 4 und der beiden dargestellten Widerlager 5 sägezahnartig profiliert sein, so dass das Einschlagen des Keils 4 zwischen die beiden Widerlager 5 problemlos möglich ist, eine Zurückbewegung jedoch verhindert wird.

Die Keile 4 oder die Widerlager 5 können zu einem gemeinsam handhabbaren Bauteil zusammengefasst sein, beispielsweise indem diese jeweiligen Bauteile als Kunststoffbauteile im Spritzguss hergestellt und durch dünne Stege miteinander verbunden sind. Oder sie können zunächst als separate Bauteile hergestellt werden und anschließend in Art einer Vormontage mittels eines flexiblen Bandes miteinander verbunden werden. Die so geschaffene Baugruppe, die mehrere Bauteile in Form der Keile 4 oder Widerlager 5 enthält, kann entweder als länglicher Streifen oder als geschlossener Ring vorliegen und erleichtert die Anbringung dieser Bauteile auf dem Rohrabschnitt 2.

## Patentansprüche

1. Muffenadapter (1),
• mit einem zylindrischen Rohrabschnitt (2),
• einer den Rohrabschnitt (2) zirkumferent außen umgebenden Dichtung (3) aus einem elastisch verformbaren Werkstoff,
wobei die Dichtung (3) einen ersten Abschnitt (15) aufweist, mit welchem sie dicht an den Rohrabschnitt (2) anschließt,
sowie einen zweiten Abschnitt (16), der gegenüber dem Rohrabschnitt (2) radial nach außen beweglich ist,
• und mit wenigstens einem Dehnelement,
welches zwischen dem Rohrabschnitt (2) und dem zweiten Abschnitt (16) der Dichtung (3) angeordnet ist,
und welches radial nach außen beweglich ist, derart, dass der Außendurchmesser der Dichtung (3) in Abhängigkeit von der jeweiligen Stellung des Dehnelements veränderlich ist,
• wobei das Dehnelement als Keil (4) ausgestaltet ist,
**dadurch gekennzeichnet,**
**dass** dem Keil (4) wenigstens ein mit dem Keil (4) zusammenwirkendes Widerlager (5) zugeordnet ist,
welche derart relativ zueinander beweglich sind,
**dass** der innerhalb der Dichtung (3) wirksame Umfang um den Rohrabschnitt (2), den Keil (4) und das Widerlager (5) und somit der Innendurchmesser der Dichtung (3) einen bestimmten, in Abhängigkeit von der Relativstellung zwischen Keil (4) und Widerlager (5) veränderlichen, mit zunehmender Überdeckung von Keil (4) und Widerlager (5) ebenfalls zunehmenden Wert aufweist,
und **dass** das Widerlager (5) als separates Element ausgestaltet ist.

2. Muffenadapter nach Anspruch 1,
**dadurch gekennzeichnet,**
**dass** das Widerlager (5) zwischen dem Keil (4) und der Dichtung (3) angeordnet ist.

3. Muffenadapter nach einem der vorhergehenden Ansprüche,
**dadurch gekennzeichnet,**
**dass** die Dichtung (3) mehrere außen zirkumferent umlaufende Vorsprünge (12) aufweist.

4. Muffenadapter nach einem der vorhergehenden Ansprüche,
**dadurch gekennzeichnet,**
**dass** ein Treibring (6) dem Widerlager (5) oder dem Keil (4) anliegend angeordnet ist,
und in axialer Richtung längs am Rohrabschnitt (2) beweglich ist.

5. Muffenadapter nach Anspruch 4,
**dadurch gekennzeichnet,**
**dass** der Treibring (6) als Schlagring ausgestaltet ist und eine Schlagfläche (7) aufweist.

6. Muffenadapter nach Anspruch 4,
**dadurch gekennzeichnet,**
**dass** dem Treibring (6) ein Klemmring zugeordnet ist, welcher ortsfest auf dem Rohrabschnitt (2) fixierbar ist, und von dem aus sich wenigstens ein Druckelement zu dem Treibring (6) erstreckt,
derart, dass durch Betätigung des Druckelements der Abstand zwischen dem Klemmring und dem Treibring (6) in axialer Richtung des Rohrabschnitts (2) vergrößerbar ist.

7. Muffenadapter nach einem der vorhergehenden Ansprüche,
**dadurch gekennzeichnet,**
**dass** ein entlang dem Rohrabschnitt (2) in axialer Richtung zur Spreizung der Dichtung (3) bewegliches Element auf seiner radial inneren Seite mit einer Sperrkralle (11) versehen ist,
wobei die Sperrkralle (11) der äußeren Oberfläche des Rohrabschnitts (2) schräg anliegt,
und eine Bewegung dieses beweglichen Elements ermöglichend sowie dessen Zurückbewegung verhindernd ausgerichtet ist.

8. Muffenadapter nach Anspruch 7,
**dadurch gekennzeichnet,**
**dass** die Sperrkralle (11) durch einen flachen, gegenüber der Oberfläche des Rohrabschnitts (2) schräggestellten Blechzuschnitt gebildet ist.

9. Muffenadapter nach Anspruch 8,
**dadurch gekennzeichnet,**
**dass** ein Blechring (10) vorgesehen ist, der eine Mehrzahl von Sperrkrallen (11) bildet.

10. Muffenadapter nach einem der vorhergehenden Ansprüche,
**dadurch gekennzeichnet,**
**dass** zwischen Keil (4) und Widerlager (5) eine Schrägverzahnung ausgestaltet ist,
die nach einer Erhöhung des Überdeckungsgrades eine Zurückbewegung des beweglichen dieser beiden Elemente verhindernd ausgestaltet ist.

11. Muffenadapter nach einem der vorhergehenden Ansprüche,
**dadurch gekennzeichnet,**
**dass** außen auf dem Rohrabschnitt (2) in axialer Richtung hintereinander mehrere Markierungen (8) angeordnet sind.

12. Muffenadapter nach Anspruch 11,
**dadurch gekennzeichnet,**
**dass** die Markierungen (8) jeweils zirkumferent um den Rohrabschnitt (2) verlaufen.

13. Muffenadapter nach Anspruch 11 oder 12,
**dadurch gekennzeichnet,**
**dass** die Markierungen (8) jeweils als unterbrechungsfreie Linien ausgestaltet sind.

14. Muffenadapter nach einem der Ansprüche 11 bis 13,
**dadurch gekennzeichnet,**
**dass** die Markierungen (8) unterschiedlich ausgestaltet sind.

15. Muffenadapter nach einem der vorhergehenden Ansprüche,
**dadurch gekennzeichnet,**
**dass** die Dichtung (3) zwischen dem ersten Abschnitt (15) und dem zweiten Abschnitt (16) eine die radiale Entfernung des zweiten Abschnitts (16) von dem Rohrabschnitt (2) erleichternde Dehnfuge aufweist.

16. Verwendung eines Muffenadapters nach einem der vorhergehenden Ansprüche zur Abdichtung einer Rohrleitung gegenüber einer Gebäudewand bei einer so genannten Mauereinführung.

## Claims

1. Sleeve adapter (1),
• comprising a cylindrical tubing section (2)
• and a seal (3) that is made from an elastically deformable material and encloses the tubing section (2) circumferentially on the outside,
where the seal (3) incorporates a first section (15) by which it sits tightly against the tubing section (2),
and a second section (16) that can be moved radially outwards relative to the tubing section (2),
• and comprising at least one expanding element that is arranged between the tubing section (2) and the second section (16) of the seal (3) and which can be moved radially outwards,
in such a way that the outside diameter of the seal (3) can be changed according to whichever position the expanding element is in,
• where the expanding element is designed as a wedge (4),
**characterised in that** at least one abutting piece (5) that co-acts with the wedge (4) is assigned to the wedge (4) so that the wedge (4) and the abutting piece (5) can be moved relative to one another in such a way that the effective circumference inside the seal (3) that encloses the tubing section (2), the wedge (4) and the abutting piece (5) and so the inside diameter of the seal (3) have a specific value according to whichever position the wedge (4) is in relative to the abutting piece (5) and increase as the overlap of wedge (4) and abutting piece (5) increases,
and that the abutting piece (5) is designed as a separate element.

2. Sleeve adapter in accordance with claim 1,
**characterised in that** the abutting piece (5) is arranged between the wedge (4) and the seal (3).

3. Sleeve adapter in accordance with any one of the foregoing claims,
**characterised in that** the seal (3) incorporates a number of projecting portions (12) that extend circumferentially around it on the outside.

4. Sleeve adapter in accordance with any one of the foregoing claims,
**characterised in that** a drive ring (6) is arranged so that it sits against the abutting piece (5) or the wedge (4) and can be moved along the tubing section (2) in an axial direction.

5. Sleeve adapter in accordance with claim 4,
**characterised in that** the drive ring (6) is designed as an impact ring and incorporates an impact surface (7).

6. Sleeve adapter in accordance with claim 4,
**characterised in that** a clamping ring that is immovably fastened to the tubing section (2) and from which at least one thrust element extends to the drive ring (6) is assigned to the drive ring (6),
in such a way that by actuating the thrust element the distance between the clamping ring and the drive ring (6) can be increased in the axial direction of the tubing section (2).

7. Sleeve adapter in accordance with any one of the foregoing claims,
**characterised in that** an element that can be moved in an axial direction along the tubing section (2) to expand the seal (3) is provided on its radially inner side with a locking prong (11),
where the locking prong (11) sits obliquely against the outside surface of the tubing section (2) and is oriented so as to enable this movable element to move and to prevent it from moving back.

8. Sleeve adapter in accordance with claim 7,
**characterised in that** the locking prong (11) is formed by a flat, shaped metal plate that is set at an oblique angle to the surface of the tubing section (2).

9. Sleeve adapter in accordance with claim 8,
**characterised in that** a metal ring (10) is provided for that forms a plurality of locking prongs (11).

10. Sleeve adapter in accordance with any one of the foregoing claims,
**characterised in that** a set of helical gear teeth that is designed to prevent the movable one of these two elements from moving back after the amount of overlap is increased is arranged between the wedge (4) and the abutting piece (5).

11. Sleeve adapter in accordance with any one of the foregoing claims,
**characterised in that** a number of markings (8) are arranged one behind the other in an axial direction on the outside of the tubing section (2).

12. Sleeve adapter in accordance with claim 11,
**characterised in that** each of the markings (8) extends circumferentially around the tubing section (2).

13. Sleeve adapter in accordance with claim 11 or 12,
**characterised in that** each of the markings (8) takes the form of an unbroken line.

14. Sleeve adapter in accordance with any one of the claims 11 to 13,
**characterised in that** the markings (8) are variously shaped.

15. Sleeve adapter in accordance with any one of the foregoing claims,
**characterised in that** the seal (3) between the first section (15) and the second section (16) incorporates an expansion joint to facilitate radial removal of the second section (16) from the tubing section (2).

16. Use of a sleeve adapter in accordance with any one of the foregoing claims for sealing a tubing-line off from a building wall in a so-called wall lead-in.

## Revendications

1. Adaptateur à manchon (1),
• comprenant un segment de tuyau cylindrique (2),
• un joint (3) en matériau élastiquement déformable entourant la circonférence extérieure du segment de tuyau (2),
sachant que le joint (3) présente un premier segment (15) par lequel il applique de manière étanche contre le segment de tuyau (2),
ainsi qu'un deuxième segment (16) déplaçable radialement vers l'extérieur par rapport au segment de tuyau (2),
• et avec au moins un élément de dilatation qui est disposé entre le segment de tuyau (2) et le deuxième segment (16) du joint (3), et qui est déplaçable radialement vers l'extérieur,
de façon que le diamètre extérieur du joint (3) soit variable en fonction de la position ponctuelle de l'élément de dilatation,
• sachant que l'élément de dilatation est configuré en cale (4),
**caractérisé en ce qu**'à la cale (4) est attribué au moins un palier antagoniste (5) interagissant avec la cale (4), faisant que tous deux sont déplaçables l'une relativement à l'autre de sorte que la circonférence efficace à l'intérieur du joint (3) autour du segment de tuyau (2), de la cale (4) et du palier antagoniste (5) et ainsi le diamètre intérieur du joint (3) présentent une valeur précise variant en fonction de la position relative entre la cale (4) et le palier antagoniste (5), valeur qui croît également comme le recouvrement de la cale (4) et du palier antagoniste (5),
et en ce que le palier antagoniste (5) est configuré comme élément séparé.

2. Adaptateur à manchon selon la revendication 1,
**caractérisé en ce que** le palier antagoniste (5) est disposé entre la cale (4) et le joint (3).

3. Adaptateur à manchon selon l'une des revendications précédentes,
**caractérisé en ce que** le joint (3) présente plusieurs saillies (12) disposées circonférentiellement à l'extérieur.

4. Adaptateur à manchon selon l'une des revendications précédentes,
**caractérisé en ce qu'**un anneau d'entraînement (6) est disposé en applique contre le palier antagoniste (5) ou la cale (4) et est déplaçable en direction axiale le long du segment de tuyau (2).

5. Adaptateur à manchon selon la revendication 4,
**caractérisé en ce que** l'anneau d'entraînement (6) est configuré comme anneau de frappe et présente une surface de frappe (7).

6. Adaptateur à manchon selon la revendication 4,
**caractérisé en ce qu'**à l'anneau d'entraînement (6) est affecté un anneau de bridage immobilisable sur place sur le segment de tuyau (2), et depuis lequel s'étend au moins un élément de compression vers l'anneau d'entraînement (6),
de sorte que l'actionnement de l'élément de compression permet d'accroître l'écart entre l'anneau de bridage et l'anneau d'entraînement (6) dans le sens axial du segment de tuyau (2).

7. Adaptateur à manchon selon l'une des revendications précédentes,
**caractérisé en ce qu'**un élément mobile dans le sens axial le long du segment de tuyau (2) pour expanser le joint (3) est muni d'une griffe de blocage (11) sur son côté intérieur radial, sachant que la griffe de blocage (11) applique en biais contre la surface extérieure du segment de tuyau (2), et qu'elle est orientée de manière à permettre un mouvement de cet élément mobile et à empêcher le recul de ce dernier.

8. Adaptateur à manchon selon la revendication 7,
**caractérisé en ce que** la griffe de blocage (11) est formée par une tôle découpée plate se trouvant en plan incliné par rapport à la surface du segment de tuyau (2).

9. Adaptateur à manchon selon la revendication 8,
**caractérisé en ce qu'**est prévu un anneau en tôle (10) formant une multitude de griffes de blocage (11).

10. Adaptateur à manchon selon l'une des revendications précédentes,
**caractérisé en ce qu'**entre la cale (4) et le palier antagoniste (5) est configurée une denture oblique qui, après une augmentation du degré de recouvrement, est configurée pour empêcher un mouvement de recul de l'élément qui des deux est mobile.

11. Adaptateur à manchon selon l'une des revendications précédentes,
**caractérisé en ce qu'**à l'extérieur, sur le segment de tuyau (2), plusieurs marquages (8) sont disposés les un derrière les autres dans le sens axial.

12. Adaptateur à manchon selon la revendication 11,
**caractérisé en ce que** les marquages (8) présentent chacun un tracé circonférentiel autour du segment de tuyau (2).

13. Adaptateur à manchon selon la revendication 11 ou 12,
**caractérisé en ce que** les marquages (8) sont configurés en lignes ininterrompues.

14. Adaptateur à manchon selon l'une des revendications 11 à 13,
**caractérisé en ce que** les marquages (8) sont configurés de manière différente.

15. Adaptateur à manchon selon l'une des revendications précédentes,
**caractérisé en ce que** le joint (3) présente, entre le premier segment (15) et le deuxième segment (16), un joint de dilatation facilitant l'éloignement radial du deuxième segment (16) par rapport au segment de tuyau (2).

16. Utilisation d'un adaptateur à manchon selon l'une des revendications précédentes pour étancher une conduite par rapport à un mur d'immeuble lors d'une introduction dite dans le mur.
